# EUROPÄISCHE PATENTSCHRIFT

(11) **EP 3 376 133 B1**
(45) Veröffentlichungstag und Bekanntmachung des Hinweises auf die Patenterteilung: **25.11.2020**
(21) Anmeldenummer: 17020344.2
(22) Anmeldetag: 08.08.2017
(51) Int. Cl.: F25B 19/00, F25B 25/00, F25D 19/00

(54) **VERFAHREN UND VORRICHTUNG ZUM KÜHLEN EINER ANORDNUNG MIT EINER STROMFÜHRUNG SOWIE SYSTEM MIT ENTSPRECHENDER VORRICHTUNG**
METHOD AND APPARATUS FOR COOLING AN ASSEMBLY COMPRISING A CONDUIT AND SYSTEM COMPRISING SUCH A DEVICE
PROCÉDÉ ET DISPOSITIF DE REFROIDISSEMENT D'UN ENSEMBLE POURVU D'UNE AMENÉE DE COURANT AINSI QUE SYSTÈME DOTÉ DU DISPOSITIF CORRESPONDANT

(30) Priorität: 14.03.2017 DE 102017002475
(43) Veröffentlichungstag der Anmeldung: 19.09.2018
(73) Patentinhaber: Linde GmbH, 82049 Pullach (DE)
(72) Erfinder: Decker, Lutz, 8400 Winterthur (CH); Alekseev, Alexander, 82515 Wolfratshausen (DE)
(74) Vertreter: Gellner, Bernd

(56) Entgegenhaltungen:
- EP-A2- 1 643 197
- US-A1- 2012 196 753
- US-A1- 2013 090 242

## Beschreibung

Die vorliegende Erfindung betrifft ein Verfahren und eine Vorrichtung zum Kühlen einer Anordnung mit einer Stromführung, die insbesondere in Form eines Hochtemperatursupraleiters ausgebildet ist, und mit Stromverbindungen, sowie ein System mit einer entsprechenden Vorrichtung gemäß den Oberbegriffen der jeweiligen unabhängigen Patentansprüche.

### Stand der Technik

Nieder- und Mittelspannungskabel bzw. -schienen können als Hochtemperatursupraleiter (HTSL) ausgebildet sein. Diese werden nachfolgend auch als »HTSL-Stromführungen« oder kurz »Stromführungen« bezeichnet. Sie bedürfen einer Kühlung auf eine Temperatur von weniger als 100 K, bevorzugt weniger als 80 K.

Die Verbindung zwischen einer kalten HTSL-Stromführung und einem konventionellen elektrischem System, das normalerweise bei Umgebungstemperaturen oder etwas drüber betrieben wird, wird typischerweise als Stromzuführung (engl. Current Leads) bezeichnet. Nachfolgend wird hierfür auch der Begriff »Stromverbindung« verwendet. Eine entsprechende Stromverbindung ist typischerweise in Form einer massiven metallischen Verbindungsleitung ausgebildet.

Bei den Anforderungen an die Kühlung entsprechender HTSL-Stromführungen bestehen einige Besonderheiten. Eine erste Besonderheit besteht darin, dass eine deutlich größere Wärmemenge (etwa das Fünf- bis Zehnfache) nicht in den HTSL-Stromführungen selbst erzeugt, sondern über die Stromverbindungen eingebracht wird. Die eingebrachte Wärmemenge muss durch eine entsprechende Kälteleistung kompensiert werden.

Eine zweite Besonderheit besteht darin, dass die elektrische Stromstärke in einer HTSL-Stromführung aufgrund der verwendeten Niederspannung typischerweise relativ groß ist. Aus diesem Grund werden HTSL-Stromführungen mit großem Querschnitt benötigt, was zu entsprechenden Materialkosten führt.

Es ist bekannt, HTSL-Stromführungen unter Verwendung von Kühlsystemen auf Basis von Flüssigstickstoff zu kühlen. Typische Merkmale entsprechender Kühlsysteme sind nachfolgend zusammengefasst:
- Es existieren zwei unterschiedliche Flüssigstickstoffströme, der sogenannte Kreislaufstickstoff und der sogenannte Badstickstoff.
- Der Kreislaufstickstoff wird typischerweise in einer Pumpe druckerhöht und nachfolgend in einem Unterkühler auf die erforderliche Kühltemperatur gekühlt, zum Verbraucher geleitet, dort angewärmt und schließlich wieder zur Pumpe zurückgeführt. (Die Bezeichnung »Unterkühler« wird verwendet, weil die Flüssigkeit am Austritt aus einem entsprechenden Wärmetauscher thermodynamisch eine unterkühlte Flüssigkeit darstellt.)
- Der Unterkühler stellt in der einfachsten Ausführung eine Rohrschlange dar, die in einem Flüssigstickstoffbad platziert wird. Der wärmere Kreislaufstickstoff wird innerhalb der Rohrschlange geführt und durch den außenliegenden, kälteren Badstickstoff gekühlt. Der Badstickstoff verdampft hierbei. Alternativ zu Rohrschlangen-Wärmetauschern können grundsätzlich auch andere Typen von Wärmetauschern eingesetzt werden.
- Die in dem unter Kühler durch das Verdampfen entstehenden Verluste an Badstickstoff werden durch das Nachfüllen aus einem Vorratsbehälter kompensiert.
- Der Druck im Kühlkreislauf stromab der Pumpe wird so gewählt, dass der Kreislaufstickstoff stets flüssig bleibt und keine Dampfblasen entstehen. Aus thermodynamischer Sicht bedeutet dies, dass der Druck im Kreislauf immer höher sein sollte als im Bad des Unterkühlers, und dass der Kreislaufstickstoff nicht über den Siedepunkt angewärmt werden darf.
- Die tiefste Temperatur des Kreislaufstickstoffs wird am Austritt aus dem Unterkühler erreicht. Diese Temperatur wird im Wesentlichen durch die Temperatur des Badstickstoffs (und den Wärmeübergang im Unterkühler) bestimmt. Die Temperatur wird durch eine Reduktion des Drucks des Badstickstoffs durch ständiges Abpumpen mit einer Vakuumpumpe erreicht. Die untere Grenze liegt bei etwa 63 K, was einem Dampfdruck von ca. 0,13 bar entspricht). Bei tieferen Temperaturen würde der Badstickstoff gefrieren.

Die DE 10 2013 011 212 A1 offenbart eine Vorrichtung der beschriebenen Art, wobei ein Hauptaspekt darin besteht, wie die Volumenänderung des Kreislaufstickstoffs gehandhabt werden kann. Es wird vorgeschlagen, eine Leitung zwischen dem Vorratsbehälter und dem Stickstoffkreislauf, die stromauf der Pumpe mündet, einzusetzen. Die EP 1 355 114 A3 schlägt aus einem vergleichbaren Zweck vor, einen Ausgleichsbehälter in den Kreislauf einzubringen. In kommerziell verfügbaren Systemen werden ebenfalls Ausgleichsbehälter, die jedoch in den Unterkühler integriert sind, eingesetzt.

In der DE 197 55 484 A1 wird ein Verfahren beschrieben, bei dem anstelle von Kreislaufstickstoff ein flüssiges Gemisch eingesetzt wird, das überwiegend aus Stickstoff und Sauerstoff besteht.

Die DE 199 04 822 C1 beschreibt ein Verfahren zur Kühlung von Stromverbindungen.

Aufgrund der hohen Gesamtkosten der HTSL-Stromführung selbst, der entsprechenden Stromverbindungen und des Kühlsystems erweisen sich entsprechende Anwendungen häufig als nicht wirtschaftlich. Die vorliegende Erfindung stellt sich daher die Aufgabe, Kühlsysteme für Stromführungen, insbesondere HTSL-Stromführungen, zu verbessern.

### Offenbarung der Erfindung

Vor diesem Hintergrund schlägt die vorliegende Erfindung ein Verfahren und eine Vorrichtung zur Kühlung einer Anordnung mit einer Stromführung und Stromverbindungen, insbesondere einer HTSL-Stromführung und Stromverbindungen, sowie ein System mit einer entsprechenden Vorrichtung mit den Merkmalen der unabhängigen Patentansprüche vor. Bevorzugte Ausgestaltungen sind Gegenstand der abhängigen Patentansprüche sowie der nachfolgenden Beschreibung.

Wenngleich der technische Hintergrund der vorliegenden Erfindung zuvor überwiegend unter Bezugnahme auf HTSL-Stromführungen beschrieben wurde und die erfindungsgemäßen Maßnahmen nachfolgend überwiegend unter Bezugnahme auf HTSL-Stromführungen beschrieben werden, eignet sich die vorliegende Erfindung grundsätzlich auch zum Einsatz in anderen Anwendungen, bei denen ein entsprechender Kühlbedarf besteht und insbesondere die oben beschriebenen Besonderheiten bestehen.

Ein wesentlicher Aspekt der vorliegenden Erfindung besteht im Einsatz eines kombinierten Kühlsystems, bei dem die Stromführung unter Verwendung von gasförmigen Helium mit einer Kühltemperatur von weniger als 60 K gekühlt wird, und bei dem die Stromverbindungen unter Verwendung von Flüssigstickstoff gekühlt werden.

Eine besonders bevorzugte Ausführungsform der vorliegenden Erfindung umfasst die Kühlung der Stromverbindungen mit Stickstoff in Form einer Abgaskühlung vorzunehmen. Hierunter wird hier verstanden, dass zumindest ein überwiegender Teil der Stromverbindungen mit aus einem Flüssigkeitsbad verdampfendem Stickstoff gekühlt wird. Die Verdampfung kann dadurch bewirkt bzw. gefördert werden, dass ein Teil bzw. Abschnitt zumindest einer der Stromverbindungen, insbesondere jeweils der Teil der Stromverbindungen, der sich in unmittelbarer Nähe zu der Stromführung befindet, in einen entsprechendes Flüssigkeitsbad untergetaucht wird. Das »kalte Ende« der Stromverbindungen befindet sich also in Flüssigstickstoff und die in den Stromverbindungen erzeugte ohmsche Wärme wird in den Flüssigstickstoff eingeleitet. Der aufgrund dieses Wärmeeintrags (vermehrt) verdampfende Stickstoff wird entlang eines nicht untergetauchten Teils der Stromverbindungen geführt und bewirkt auf diese Weise eine Kühlung. Die Stromverbindungen werden auf diese Weise entgegen der Strömungsrichtung des verdampften Stickstoffs sukzessive von einer höheren Temperatur (insbesondere Umgebungstemperatur) auf eine tiefere Temperatur (insbesondere die Temperatur des flüssigen Stickstoffs) abgekühlt.

Ein wesentlicher Vorteil, der sich im Rahmen der vorliegenden Erfindung aus der Verwendung von gasförmigem Helium ergibt, ist der, dass Kühltemperaturen von deutlich weniger als 60 K erreicht werden können. Wie erwähnt, ist dies in herkömmlichen Flüssigstickstoffkühlungen nicht möglich, da der Stickstoff bei Temperaturen unterhalb von 63K (Schmelz- oder Tripelpunkt für Stickstoff) eine feste Phase bilden würde. Die Stromtragfähigkeit von hochtemperatursupraleitenden Materialien ist sehr stark temperaturabhängig, Bei Temperaturen von 50 bis 55 K ist diese etwa um Faktor 1,5 bis 2 besser als bei Temperaturen von 65 bis 70 K.

Durch die Kühlung auf entsprechend tiefe Temperaturen erhöht sich also die Stromtragfähigkeit der Stromführung, sodass der Querschnitt unter deutlicher Kostenreduktion verringert werden kann.

Die höheren Kosten eines Heliumkühlsystems gegenüber einem Kühlsystem basierend auf Flüssigstickstoff spielen im Rahmen der vorliegenden Erfindung eine vergleichsweise geringe Rolle, da das zur Kühlung der Stromführung eingesetzte Heliumkühlsystem vergleichsweise klein dimensioniert werden kann. Dies ist möglich, weil die größte Kälteleistung (etwa das Fünf- bis Sechsfache) zur Kühlung der Stromverbindungen erforderlich ist, für die jedoch, wie erwähnt, nach wie vor der preisgünstige Flüssigstickstoff eingesetzt wird. Auf diese Weise schafft die vorliegende Erfindung insgesamt ein deutlich verbessertes Verfahren zur Kühlung von Stromführungen, insbesondere von HTSL-Stromführungen, und entsprechend verbesserte Vorrichtungen und Systeme.

Insgesamt schlägt die vorliegende Erfindung ein Verfahren zur Kühlung einer Anordnung mit einer Stromführung, die auf einem ersten Temperaturniveau betrieben wird, und zwei Stromverbindungen, die mit der Stromführung elektrisch leitend verbunden sind und auf einem zweiten Temperaturniveau oberhalb des ersten Temperaturniveaus betrieben werden, vor. Zur Erreichung der zuvor erläuterten Vorteile ist vorgesehen, dass die Stromführung unter Verwendung von gasförmigen Helium und die Stromverbindungen unter Verwendung von flüssigem Stickstoff gekühlt werden. Weitere Details wurden bereits zuvor erwähnt und sind insbesondere unter Bezugnahme auf die beigefügte Figur nochmals erläutert.

Gemäß einer besonders bevorzugten Ausführungsform der vorliegenden Erfindung ist vorgesehen, dass die Kühlung der Stromverbindungen unter Verwendung des flüssigen Stickstoffs umfasst, den flüssigen Stickstoff zumindest teilweise zu verdampfen und den dabei gebildeten Dampf entlang zumindest eines Abschnittes der einen oder der mehreren Stromverbindungen zu führen. Im Rahmen dieser Kühlung erwärmt sich der verdampfte Stickstoff zunehmend.

Im Rahmen einer entsprechenden Abgaskühlung ist insbesondere vorgesehen, dass zum Führen des verdampften flüssigen Stickstoffs entlang zumindest eines Abschnitts der Stromverbindungen ein oder mehrere Führungskanäle verwendet werden.

Vorteilhafterweise wird zur zumindest teilweisen Verdampfung des flüssigen Stickstoffs ein Abschnitt zumindest einer der Stromverbindungen in den flüssigen Stickstoff eingebracht und über die Stromverbindung(en) Wärme in den flüssigen Stickstoff eingeleitet. Auf diese Weise können die Stromverbindungen letztlich auf eine Temperatur abgekühlt werden, die jener des flüssigen Stickstoffs entspricht. Beispielsweise kann der Abschnitt der Stromverbindungen, der in den flüssigen Stickstoff eingebracht wird, unter Verwendung des flüssigen Stickstoffs auf ein Temperaturniveau von 63 bis 80 K gekühlt werden. Die über die Stromverbindungen in den flüssigen Stickstoff eingeleitete Wärme umfasst insbesondere ohmsche Wärme, die durch einen Stromfluss in der einen oder den mehreren Stromverbindungen gebildet wird, aber auch ggf. auch von außen über das metallische Material der Stromverbindungen eingeleitete Wärme.

Vorteilhafterweise kann im Rahmen der vorliegenden Erfindung die Kühlung der Stromverbindungen unter Verwendung des flüssigen Stickstoffs auf einem atmosphärischen Druckniveau durchgeführt werden, dies ist möglich, weil im Rahmen der vorliegenden Erfindung lediglich die Stromverbindungen unter Verwendung des flüssigen Stickstoffs gekühlt werden und daher höhere Temperaturen verwendet werden können als im Stand der Technik, wo auch die Stromführung selbst unter Verwendung des flüssigen Stickstoffs gekühlt wird.

Wie bereits oben erwähnt, kann im Rahmen der vorliegenden Erfindung, weil gasförmiges Helium eingesetzt wird, die Stromführung unter Verwendung des gasförmigen Heliums auf ein Temperaturniveau von 20 bis 60 K gekühlt werden.

Derartige geringe Temperaturen wären, wie ebenfalls bereits erwähnt, unter Verwendung von ausschließlich flüssigem Stickstoff nicht erreichbar.

Vorteilhafterweise wird zur Kühlung der Stromführung das gasförmige Helium in einem geschlossenen Kühlkreislauf geführt. Unter einem "geschlossenen Kühlkreislauf« sei dabei ein abgeschlossenes System verstanden, das über eine Heliumeinspeisung mit Helium versorgt und aus dem über eine Heliumentnahme Helium abgezogen wird. Im Rahmen der vorliegenden Erfindung kann insbesondere eine Heliumrückgewinnung bzw. Heliumrückkühlung vorgesehen sein, in welcher das zuvor zur Kühlung verwendete Helium von einem Temperaturniveau von beispielsweise ca. 60 K auf einen Temperaturniveau von beispielsweise ca. 50 K rückgekühlt werden kann. Für eine entsprechende Rückkühlung eignen sich aus dem Stand der Technik bekannte Verfahren. Das entsprechend abgekühlte Helium eignet sich anschließend zur erneuten Verwendung für die Kühlung der Stromführung.

Die vorliegende Erfindung erstreckt sich auch auf eine Vorrichtung zur Kühlung einer Anordnung mit einer Stromführung, die für einen Betrieb auf einem ersten Temperaturniveau eingerichtet ist, und zwei Stromverbindungen, die mit der Stromführung leitend verbunden und für einen Betrieb auf einem zweiten Temperaturniveau oberhalb des ersten Temperaturniveaus eingerichtet sind. Erfindungsgemäß zeichnet sich die Vorrichtung dadurch aus, dass sie ein erstes Kühlsystem, das dafür eingerichtet ist, die Stromführung unter Verwendung von gasförmigem Helium zu kühlen, und ein zweite Kühlsystem, das dafür eingerichtet ist, die Stromverbindungen unter Verwendung von flüssigem Stickstoff zu kühlen, aufweist.

Bezüglich der Merkmale und Vorteile einer derartigen Vorrichtung gelten die zuvor bezüglich des erfindungsgemäßen Verfahrens vorgenommenen Erläuterungen in gleicher bzw. entsprechender Weise. Auf diese wird daher ausdrücklich verwiesen.

Insbesondere kann das zweite Kühlsystem einer entsprechenden Vorrichtung ein zur Aufnahme des flüssigen Stickstoffs eingerichtetes Flüssigstickstoffbad aufweisen.

Vorteilhafterweise ist dabei das Flüssigstickstoffbad zur Aufnahme eines Abschnitts zumindest einer der Stromverbindungen eingerichtet.

Das zweite Kühlsystem weist in einer besonders bevorzugten Ausgestaltung einen oder mehrere zur Führung von aus dem Stickstoffbad verdampfendem Stickstoff entlang eines Abschnitts der Stromverbindungen eingerichtete Führungskanäle auf.

Das erste Kühlsystem weist vorteilhafterweise eine oder mehrere, zum Umschließen und Kühlen zumindest eines Abschnitts der Stromführung eingerichtete Führungseinrichtungen für das gasförmige Helium auf.

Ein System mit einer Anordnung, die eine Stromführung, die für einen Betrieb auf einem ersten Temperaturniveau eingerichtet ist und über Stromverbindungen, die mit der Stromführung leitend verbunden und für einen Betrieb auf einem zweiten Temperaturniveau oberhalb des ersten Temperaturniveaus eingerichtet sind, ist ebenfalls Gegenstand der vorliegenden Erfindung. Erfindungsgemäß weist dieses System eine Vorrichtung auf, wie sie zuvor erläutert wurde.

Auch das erfindungsgemäß vorgeschlagene System profitiert damit von den zuvor erläuterten Vorteilen, auf die daher ausdrücklich verwiesen wird.

Besonders vorteilhaft ist es, wenn in einem entsprechenden System die Stromverbindungen mit oberflächenvergrößernden Wärmeaustauschstrukturen zum Wärmeaustausch mit dem verdampfenden Stickstoff ausgestattet sind. Entsprechende Wärmeaustauschstrukturen können beispielsweise in Form von Kühlrippen ausgebildet sein, die einstückig mit der einen oder den mehreren Stromverbindungen ausgebildet oder in geeigneter Weise auf diese aufgebracht sein können.

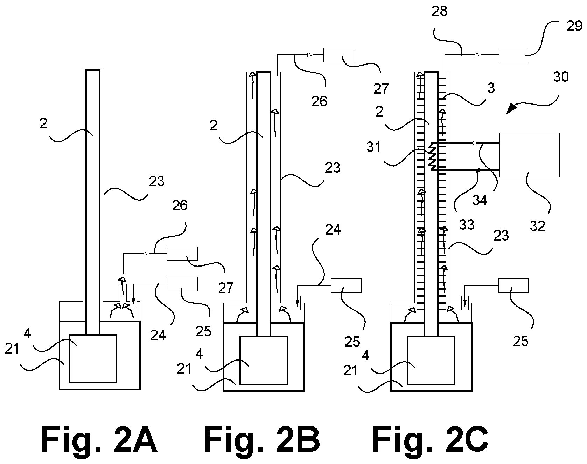

Die Verwendung der erfindungsgemäß eingesetzten Kühlsysteme in einem entsprechenden System schließt die Verwendung weiterer Kühlsysteme, beispielsweise externer Kühler, explizit nicht aus. Wie beispielsweise unter Bezugnahme auf die beigefügte Figur 2C veranschaulicht, kann beispielsweise in eine entsprechende Stromverbindung eine von einem Kühlmittel durchströmte Leitung eingebracht werden. Auch eine Anbringung einer entsprechenden Leitung an einer Außenseite der Stromverbindung ist grundsätzlich möglich. Insbesondere erfolgt eine derartige zusätzliche Kühlung auf einem Temperaturniveau oberhalb von 140 K.

Die Erfindung wird nachfolgend unter Bezugnahme auf die beigefügten Zeichnungen näher erläutert, in der Ausführungsformen der Erfindung veranschaulicht sind.

Kurze Beschreibung der Zeichnung
Figur 1 zeigt ein System gemäß einer Ausführungsform der Erfindung in vereinfachter schematischer Darstellung.
Figuren 2A bis 2C zeigen Details eines Systems gemäß einer Ausführungsform der Erfindung in vereinfachter schematischer Darstellung.

In den Figuren sind gleiche oder einander funktionell entsprechende Elemente mit identischen Bezugszeichen angegeben. Auf eine wiederholte Erläuterung derartiger Elemente wird der Übersichtlichkeit halber verzichtet.

### Ausführliche Beschreibung der Zeichnung

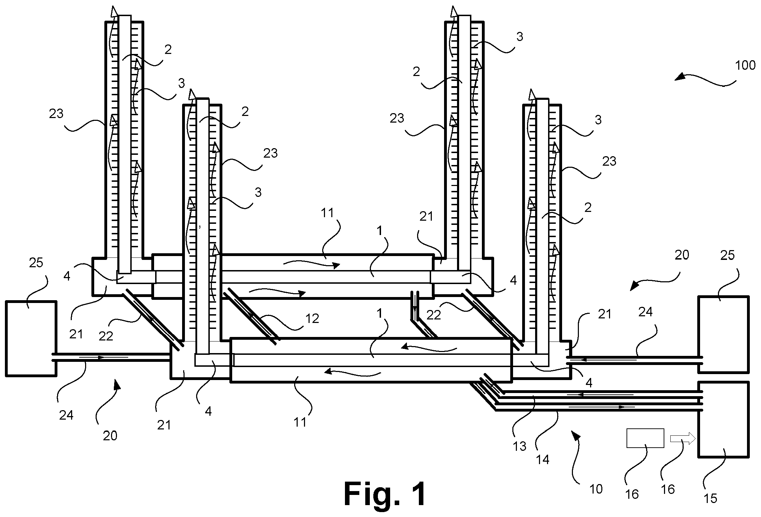

in Figur 1 ist ein System gemäß einer Ausführungsform der Erfindung in vereinfachter schematischer Darstellung veranschaulicht und insgesamt mit 100 bezeichnet.

Das System 100 umfasst im dargestellten Beispiel zwei für einen Betrieb auf einem (ersten) Temperaturniveau von weniger als 50 K eingerichtete Stromführungen 1, beispielsweise HTSL-Stromführungen. Die Stromführungen 1 sind jeweils über Stromverbindungen 2 mit einer oder mehreren, die Stromführungen 1 versorgenden oder von den Stromführungen 1 versorgten, auf einem (zweiten) höheren Temperaturniveau betriebenen Einheiten, die hier nicht im Detail dargestellt sind, verbunden. Die Stromverbindungen 2 sind im dargestellten Beispiel jeweils mit oberflächenvergrößernden Wärmeaustauschstrukturen 3, insbesondere Kühlrippen, versehen. Die Stromverbindungen 2 können über Zwischenleitungen bzw. Kopplungselemente 4 an die Stromführungen 1 angebunden sein.

Zur Kühlung der Stromführungen 1 ist ein (erstes) Kühlsystem 10 vorgesehen, das zur Kühlung der Stromführungen 1 unter Verwendung von gasförmigem Helium eingerichtet ist. Das erste Kühlsystem 10 umfasst hierzu die Stromführungen 1 umgebende Heliumführungen, in denen das flüssige Helium in der angezeigten Pfeilrichtung strömt. Die Heliumführungen 11 sind im dargestellten Beispiel über eine Verbindungsleitung 12 miteinander verbunden.

Zur Speisung mit kaltem Helium ist eine Speiseleitung 13, zur Rückführung von erwärmtem Helium eine Rückführleitung 14 vorgesehen. An die Speiseleitung 13 und die Rückführleitung 14 ist eine Heliumversorgung 15 angeschlossen, die über eine Energieversorgungseinheit 16 mit Energie 17 versorgt werden kann. Die Heliumversorgung 15 kann beispielsweise Helium auf einem Temperaturniveau von beispielsweise ca. 40 K in die Speiseleitung 13 einspeisen und erhält über die Rückführleitung 14 beispielsweise Helium auf einem Temperaturniveau von 50 K. Die Speiseleitung 13 und die Rückführleitung 14 sind in geeigneter Weise thermisch isoliert, beispielsweise unter Verwendung einer Vakuumisolation.

Zur Kühlung der Stromverbindungen 2 sind im dargestellten Beispiel zwei (zweite) Kühlsysteme 20 vorgesehen, die für einen Betrieb mit flüssigem Stickstoff eingerichtet sind. Die Kühlsysteme 20 umfassen dabei für jede Stromverbindung 2 jeweils ein Flüssigstickstoffbad 21, in dem flüssiger Stickstoff jeweils bis zu einer definierten Füllhöhe ansteht. Zur Verbindung jeweils zweier Flüssigstickstoffbäder 21 sind Verbindungsleitungen 22 vorgesehen. Die unteren Enden der Stromverbindungen 2 sind jeweils in den Flüssigstickstoff in den Flüssigstickstoffbädern 21 eingetaucht, so dass über die Stromverbindungen 2 Wärme in den Flüssigstickstoff eingeleitet wird und kontinuierlich ein Teil hiervon verdampft.

Der aus den Flüssigstickstoffbädern 21 verdampfende Stickstoff steigt auf und wird durch Führungskanäle 23, die die Stromverbindungen 2 mit den Wärmeaustauschstrukturen 3 koaxial umgeben, in der dargestellten Pfeilrichtung nach oben geführt. Am oberen Ende verlässt der bei der Kühlung der Stromverbindungen 2 erwärmte verdampfte Stickstoff die Führungskanäle 23 typischerweise bei Umgebungstemperatur.

Zur Speisung der Stickstoffbäder 21 mit dem flüssigen Stickstoff sind Speiseleitungen 24 vorgesehen, die jeweils an Stickstoffversorgungen 25 angebunden sind. Die Stickstoffversorgungen 25 speisen in die Speiseleitungen 24 flüssigen Stickstoff auf einem Temperaturniveau von beispielsweise ca. 77 K ein.

Wenngleich in dem in Figur 1 veranschaulichten Ausführungsbeispiel zwei Kühlsysteme 20 zur Kühlung unter Verwendung von flüssigem Stickstoff vorgesehen sind, kann in einer alternativen Ausgestaltung auch vorgesehen sein, sämtliche Flüssigkeitsbäder 21 über gemeinsame Stickstoffversorgungen 25 zu speisen oder jeweils eine individuelle Speisung über eine jeweilige Stickstoffversorgung vorzunehmen. Beliebige Elemente der zweiten Kühlsysteme können in jeweils geeigneter Weise zusammengefasst oder getrennt ausgeführt sein.

Entsprechendes gilt auch für die Kühlsysteme 10, die zur Kühlung unter Verwendung von Helium eingerichtet sind. Insbesondere richtet sich die konkrete Ausgestaltung der Kühlsysteme 10, 20 auch nach den jeweils vorliegenden Leitungsstrecken, insbesondere der Stromführungen 1.

In den Figuren 2A bis 2C sind Details eines Systems gemäß einer Ausführungsform der Erfindung vereinfacht schematisch dargestellt. Die in den Figuren 2A bis 2C der Figur 2 dargestellten Ausführungsformen können beispielsweise in einem System 100 zum Einsatz kommen, wie es in Figur 1 gezeigt ist und zuvor erläutert wurde.

In dem in Figur 2A veranschaulichten Ausführungsbeispiel umgibt der Führungskanal 23 die Stromverbindung 2 relativ eng, sodass nur wenig verdampfter Stickstoff entlang der Stromverbindung 2 geleitet wird. Zur Ableitung des überwiegenden Anteils des verdampften Stickstoffs ist eine Entnahmeleitung 26 vorgesehen, die beispielsweise in einer Einheit 27 zur weiteren Verwertung des nur in geringem Umfang erwärmten, verdampften Stickstoffs eingerichtet sein kann.

Die in Figur 2B veranschaulichte Ausführungsform unterscheidet sich hiervon dadurch, dass sämtlicher oder ein überwiegender Teil des über die Speiseleitung 24 eingespeisten flüssigen Stickstoffs nach seiner Verdampfung über den Führungskanal 23 abgeführt wird. In dem in Figur 2B veranschaulicht denn Ausführungsbeispiel ist die Stromverbindung 2 nicht mit Oberflächen vergrößernden Wärmeaustauschstrukturen 3 versehen, so das sich auch hier der Stickstoff bei der Führung durch den Führungskanal 23 in geringerem Umfang erwärmt. Auch dieser Stickstoff kann daher einer Einheit 27 zur weiteren Verwertung zugeführt werden.

Das in Figur 2C veranschaulicht der Ausführungsbeispiel entspricht überwiegend jenem, wie es bereits in Figur 1 als Teil des Systems 100 veranschaulicht ist. Die Stromverbindung 2 ist hier mit oberflächenvergrößernden Wärmeaustauschstrukturen 3 versehen, sodass sich ein besonders intensiver Wärmeaustausch zwischen der Stromverbindung 2 und dem diese umströmenden, verdampften Stickstoff ergibt. Hierdurch verlässt der verdampfte Stickstoff den Führungskanal 23 mit vergleichsweise hoher Temperatur. Dieser Stickstoff kann daher entweder an die Atmosphäre abgegeben oder einer Einrichtung 29 zur weiteren Verwertung, beispielsweise zur Rückkühlung, zugeführt werden.

Optional ist ein (drittes) Kühlsystem 30 vorgesehen, das in dem in Figur 2C dargestellten Beispiel eine Wärmeaustauscheinheit 31 aufweist, die in die Zuleitung 2 eingebracht oder auf diese aufgebracht sein kann. Die Wärmeaustauscheinheit 31 kann von einer Kühlmittelversorgung 32 unter Verwendung entsprechender Leitungen 33 und 34 mit einem geeigneten Kühlmittel beaufschlagt werden. Insbesondere kann das Kühlsystem 30 auf einem Temperaturniveau oberhalb von beispielsweise ca. 140 K eingesetzt werden.

## Patentansprüche

1. Verfahren zur Kühlung einer Anordnung mit einer Stromführung (1), die auf einem ersten Temperaturniveau betrieben wird, und mit zwei Stromverbindungen (2), die mit der Stromführung (1) elektrisch leitend verbunden sind und auf einem zweiten Temperaturniveau oberhalb des ersten Temperaturniveaus betrieben werden, **dadurch gekennzeichnet, dass** die Stromführung (1) unter Verwendung von gasförmigem Helium und die Stromverbindungen (2) unter Verwendung von flüssigem Stickstoff gekühlt werden.

2. Verfahren nach Anspruch 1, bei dem die Kühlung der Stromverbindungen (2) unter Verwendung des flüssigen Stickstoffs umfasst, den flüssigen Stickstoff zumindest teilweise zu verdampfen und entlang zumindest eines Abschnittes der Stromverbindungen (2) zu führen.

3. Verfahren nach Anspruch 2, bei dem zum Führen des verdampften flüssigen Stickstoffs entlang des zumindest einen Abschnitts der Stromverbindungen (2) ein oder mehrere Führungskanäle (23) verwendet werden.

4. Verfahren nach Anspruch 2 oder 3, bei dem zur zumindest teilweisen Verdampfung des flüssigen Stickstoffs ein Abschnitt zumindest einer der Stromverbindungen (2) in den flüssigen Stickstoff eingebracht wird, und bei dem über die zumindest eine Stromverbindung (2) Wärme in den flüssigen Stickstoff eingeleitet wird.

5. Verfahren nach Anspruch 4, bei dem der in den flüssigen Stickstoff eingebrachte Abschnitt der zumindest einen Stromverbindung (2) unter Verwendung des flüssigen Stickstoffs auf ein Temperaturniveau von 63 bis 80 K gekühlt wird.

6. Verfahren nach einem der vorstehenden Ansprüche, bei dem die Kühlung der Stromverbindungen (2) unter Verwendung des flüssigen Stickstoffs auf einem atmosphärischen Druckniveau durchgeführt wird.

7. Verfahren nach einem der vorstehenden Ansprüche, bei dem die Stromführung (1) unter Verwendung des gasförmigen Heliums zumindest teilweise auf ein Temperaturniveau von 20 bis 63 K gekühlt wird.

8. Verfahren nach einem der vorstehenden Ansprüche, bei dem zur Kühlung der Stromführung (1) das gasförmige Helium in einem geschlossenen Kühlkreislauf entlang der Stromführung (1) geführt wird.

9. Vorrichtung zur Kühlung einer Anordnung mit einer Stromführung (1), die für einen Betrieb auf einem ersten Temperaturniveau eingerichtet ist, und mit zwei Stromverbindungen (2), die mit der Stromführung (1) elektrisch leitend verbunden und für einen Betrieb auf einem zweiten Temperaturniveau oberhalb des ersten Temperaturniveaus eingerichtet sind, **dadurch gekennzeichnet, dass** die Vorrichtung ein erstes Kühlsystem (10), das dafür eingerichtet ist, die Stromführung (1) unter Verwendung von gasförmigem Helium zu kühlen, und ein zweites Kühlsystem (20), das dafür eingerichtet ist, die Stromverbindungen (2) unter Verwendung von flüssigem Stickstoff zu kühlen, aufweist.

10. Vorrichtung nach Anspruch 9, bei dem das zweite Kühlsystem (20) ein zur Aufnahme des flüssigen Stickstoffs eingerichtetes Stickstoffbad (21) aufweist.

11. Vorrichtung nach Anspruch 10, bei dem das Stickstoffbad (21) zur Aufnahme eines Abschnitts zumindest einer der der Stromverbindungen (2) eingerichtet ist.

12. Vorrichtung nach Anspruch 10 oder 11, bei dem das zweite Kühlsystem (20) einen oder mehrere Führungskanäle, der oder die zur Führung von aus dem Stickstoffbad verdampfendem Stickstoff entlang eines Abschnitts zumindest einer der Stromverbindungen (2) eingerichtet sind, aufweist.

13. System (100), das eine Anordnung mit einer Stromführung (1), die für einen Betrieb auf einem ersten Temperaturniveau eingerichtet ist, und mit Stromverbindungen (2), die mit der Stromführung leitend verbunden und für einen Betrieb auf einem zweiten Temperaturniveau oberhalb des ersten Temperaturniveaus eingerichtet sind, aufweist, **gekennzeichnet durch** eine Vorrichtung nach einem der Ansprüche 9 bis 12.

14. System nach Anspruch 13, bei der die Stromverbindungen (2) mit oberflächenvergrößernden Wärmeaustauschstrukturen (3) zum Wärmeaustausch mit dem verdampfenden Stickstoff ausgestattet sind.

## Claims

1. A method for cooling an arrangement comprising a current conductor (1), which is operated at a first temperature level, and comprising two current connections (2), which are electrically conductively connected to the current conductor (1) and are operated at a second temperature level above the first temperature level, **characterized in that** the current conductor (1) is cooled using gaseous helium and the current connections (2) are cooled using liquid nitrogen.

2. The method according to claim 1, in which the cooling of the current connections (2) using the liquid nitrogen comprises at least partially evaporating the liquid nitrogen and guiding it along at least one section of the current connections (2).

3. The method according to claim 2, in which one or more guide channels (23) are used for guiding the evaporated liquid nitrogen along the at least one section of the current connections (2).

4. The method according to claim 2 or 3, in which, for the at least partial evaporation of the liquid nitrogen, a section of at least one of the current connections (2) is introduced into the liquid nitrogen, and in which heat is introduced into the liquid nitrogen via the at least one current connection (2).

5. The method according to claim 4, in which the section of the at least one current connection (2) introduced into the liquid nitrogen is cooled to a temperature level of 63 to 80 K using the liquid nitrogen.

6. The method according to one of the preceding claims, in which the cooling of the current connections (2) is carried out using the liquid nitrogen at an atmospheric pressure level.

7. The method according to one of the preceding claims, in which the current conductor (1) is at least partially cooled to a temperature level of 20 to 63 K using the gaseous helium.

8. The method according to one of the preceding claims, in which the gaseous helium is guided along the current conductor (1) in a closed cooling circuit to cool the current conductor (1).

9. A device for cooling an arrangement comprising a current conductor (1), which is configured for operation at a first temperature level, and comprising two current connections (2), which are electrically conductively connected to the current conductor (1) and are configured for operation at a second temperature level above the first temperature level, **characterized in that** the device has a first cooling system (10), which is configured to cool the current conductor (1) using gaseous helium, and a second cooling system (20), which is configured to cool the current connections (2) using liquid nitrogen.

10. The device according to claim 9, in which the second cooling system (20) has a nitrogen bath (21) configured to receive the liquid nitrogen.

11. The device according to claim 10, in which the nitrogen bath (21) is configured to receive a section of at least one of the current connections (2).

12. The device according to claim 10 or 11, in which the second cooling system (20) has one or more guide channels, which are configured to guide nitrogen evaporating from the nitrogen bath along a section of at least one of the current connections (2).

13. A system (100) having an arrangement comprising a current conductor (1), which is configured for operation at a first temperature level, and comprising current connections (2), which are electrically conductively connected to the current conductor and are configured for operation at a second temperature level above the first temperature level, **characterized by** a device according to one of claims 9 to 12.

14. The system according to claim 13, in which the current connections (2) are equipped with surface-increasing heat exchange structures (3) for the heat exchange with the evaporating nitrogen.

## Revendications

1. Procédé de refroidissement d'un ensemble pourvu d'une amenée de courant (1), qui est actionné à un premier niveau de température, ainsi que de deux connexions électriques (2), qui sont connectées de manière électroconductrice à l'amenée de courant (1) et actionnées à un second niveau de température supérieur au premier niveau de température, **caractérisé en ce que** l'amenée de courant (1) est refroidie par l'utilisation d'hélium gazeux et que les connexions électriques (2) sont refroidies par l'utilisation d'azote liquide.

2. Procédé selon la revendication 1, dans lequel le refroidissement des connexions électriques (2) par l'utilisation d'azote liquide comprend la vaporisation au moins partielle de l'azote liquide et son guidage le long d'au moins une section des connexions électriques (2).

3. Procédé selon la revendication 2, dans lequel pour le guidage de l'azote liquide vaporisé le long d'au moins une section des connexions électriques (2), un ou plusieurs canaux de guidage (23) sont utilisés.

4. Procédé selon la revendication 2 ou 3, dans lequel pour la vaporisation au moins partielle de l'azote liquide, une section d'au moins une des connexions électriques (2) est placée dans l'azote liquide et dans lequel de la chaleur est introduite dans l'azote liquide par le biais de l'au moins une connexion électrique (2).

5. Procédé selon la revendication 4, dans lequel la section de l'au moins une connexion électrique (2) placée dans l'azote liquide est refroidie par l'utilisation de l'azote liquide à un niveau de température allant de 63 à 80 K.

6. Procédé selon l'une quelconque des revendications précédentes, dans lequel le refroidissement des connexions électriques (2) est réalisé par l'utilisation de l'azote liquide à un niveau de pression atmosphérique.

7. Procédé selon l'une quelconque des revendications précédentes, dans lequel l'amenée de courant (1) est refroidie par l'utilisation de l'hélium gazeux au moins partiellement à un niveau de température allant de 20 à 63 K.

8. Procédé selon l'une quelconque des revendications précédentes, dans lequel, pour le refroidissement de l'amenée de courant (1), l'hélium gazeux est guidé dans un circuit de refroidissement fermé le long de l'amenée de courant (1).

9. Dispositif de refroidissement d'un ensemble pourvu d'une amenée de courant (1), qui est conçu pour un actionnement à un premier niveau de température, ainsi que de deux connexions électriques (2), qui sont reliées à l'amenée de courant (1) de manière électroconductrice et sont conçues pour un actionnement à un second niveau de température supérieur au premier niveau de température, **caractérisé en ce que** le dispositif présente un premier système de refroidissement (10), qui est conçu pour refroidir l'amenée de courant (1) par l'utilisation d'hélium gazeux et un second système de refroidissement (20), qui est conçu pour refroidir les connexions électriques (2) par l'utilisation d'azote liquide.

10. Dispositif selon la revendication 9, dans lequel le second système de refroidissement (20) présente un bain d'azote (21) conçu pour recevoir l'azote liquide.

11. Dispositif selon la revendication 10, dans lequel le bain d'azote (21) est conçu pour recevoir une section d'au moins une des connexions électriques (2).

12. Dispositif selon la revendication 10 ou 11, dans lequel le second système de refroidissement (20) présente un ou plusieurs canaux de guidage, qui sont conçus pour guider l'azote vaporisé à partir du bain d'azote le long d'une section d'au moins une des connexions électriques (2).

13. Système (100), présentant un ensemble pourvu d'une amenée de courant (1), conçue pour un actionnement à un premier niveau de température, ainsi que de connexions électriques (2), reliées de manière conductrice à l'amenée de courant et conçues pour un actionnement à un second niveau de température supérieur au premier niveau de température, **caractérisé par** un dispositif selon l'une quelconque des revendications 9 à 12.

14. Système selon la revendication 13, dans lequel les connexions électriques (2) sont équipées de structures d'échange de chaleur (3) augmentant la surface pour un échange de chaleur avec l'azote qui se vaporise.
